# EUROPEAN PATENT APPLICATION

(11) **EP 1 858 143 A2**
(43) Date of publication of application: **21.11.2007**
(21) Application number: 07108387.7
(22) Date of filing: 16.05.2007
(51) Int. Cl.: H02M 1/00

(54) **Switching power supply, electronic apparatus, and method of controlling switching power supply circuit**

(30) Priority: 18.05.2006 JP 2006139461
(71) Applicant: Sony Corporation, Minato-ku Tokyo (JP)
(72) Inventor: Nagashima, Takayuki, Shinagawa-ku Tokyo (JP); Nakamura, Shinji, Tokyo (JP); Hirase, Akihiro, Shinagawa-ku Tokyo (JP)
(74) Representative: Thévenet, Jean-Bruno

(57) **Abstract**

A switching power supply device includes a switching element (22) for switching an input direct-current power, a smoothing section (25, 26, 27) for smoothing and then outputting the direct-current power switched by the switching element (22), a square wave generating section (30) for generating a square wave with a constant duty cycle to control switching by the switching element (22), and a control section (23) for watching an output voltage of the smoothing section (25, 26, 27) to control a period of generating the square wave generated by the square wave generating section (30) so that the output voltage is organized within a certain range.

## Description

### BACKGROUND OF THE INVENTION

### 1. Technical Field

The present invention relates to a switching power supply device for converting the voltage of a direct-current power supply, an electronic apparatus equipped with the power supply device, and a method of controlling the switching power supply circuit applied to control of the power supply device.

### 2. Related Art

From the past, the switching power supply devices have widely been used as the power supply circuits (devices) of various electronic apparatuses. In the configuration of a typical switching power supply device in related art, there is provided a switching element for switching the input power supply at high speed, and the output power supply is obtained by smoothing the switching output of the switching element. The configuration for switching operation of the switching element is arranged to perform the on-off control by a PWM wave.

The PWM wave for performing the on-off control of the switching element is arranged to be generated based on the result of comparison between the output voltage obtained by smoothing the switching output and the input voltage. For example, it is arranged that the duty cycle of the PWM wave to be generated is varied based on the comparison so that the output voltage becomes a specified value.

In JP-A-2000-308335, there is disclosed the configuration of a switching power supply device.

### SUMMARY

Incidentally, since the switching power supply device in the related art has the configuration of obtaining a desired output voltage by changing the duty cycle of the PWM wave for controlling the switching element, it is required to generate the PWM wave with variable duty cycle, and accordingly, the configuration of controlling the switching element has been problematically complicated.

It has been required, particularly in recent years, to reduce the standby power as a measure of achieving low power consumption of an electronic apparatus, and in order for reducing the standby power consumed while the apparatus is in the standby state, it is required to reduce the power consumption of the switching power supply device in the standby state. However, in reality, in order for generating the PWM wave with variable duty cycle, certain level of circuit configuration is required, which causes a certain amount of power consumption, and problematically limits the effectiveness of reducing the required standby power.

Although in the patent document described above, there is described the configuration of reducing the power consumption by temporarily switching off the circuit for generating the variable PWM wave, there has been a limitation in the improvement of power consumption (the conversion efficiency) in the switching power supply device as long as the circuit for generating the variable PWM wave is employed.

In view of the above points, it is desirable to provide a switching power supply circuit simple in the circuit configuration and superior in the conversion efficiency.

According to an embodiment of the invention, in the case of controlling a switching power supply circuit for switching the input direct-current power by the switching element to convert the voltage, a configuration of generating a square wave with constant duty cycle to control switching by the switching element is adopted. Further, it is arranged to watch the voltage of the output obtained by smoothing the output of the switching element to control the generation period of the square wave so that the output voltage is organized within a certain range.

Accordingly, by providing a circuit for generating the square wave with a constant duty cycle, and by controlling the generation period of the square wave of the square generating circuit in accordance with the output voltage, the output voltage within a required voltage range can be obtained.

According to an embodiment of the invention, by providing the circuit for generating the square wave with a constant duty cycle, an output with desired voltage range can be obtained, and the switching power supply can be configured with a very simple circuit configuration. Further, the circuit configuration is simple, and the conversion efficiency is high, therefore, low power consumption of the apparatus provided with the switching power supply can be achieved.

### BRIEF DESCRIPTION OF THE DRAWINGS

Fig. 1 is a circuit diagram showing a configuration example according to a first embodiment of the present invention.
Fig. 2 is a configuration diagram showing an example of power supply control for an apparatus equipped with a switching power supply according to a first embodiment of the invention.
Fig. 3 is a flowchart showing an example of operation control according to the first embodiment of the present invention.
Figs. 4A through 4F are waveform charts showing examples of operational state according to the first embodiment of the present invention.
Fig. 5 is a circuit diagram showing a configuration example according to a second embodiment of the present invention.
Figs. 6A through 6D are waveform charts showing examples of operational state according to the second embodiment of the present invention.
Fig. 7 is a circuit diagram showing a configuration example according to a third embodiment of the present invention.
Fig. 8 is a flowchart showing an example of operation control according to the third embodiment of the present invention.

### DESCRIPTION OF THE EMBODIMENTS

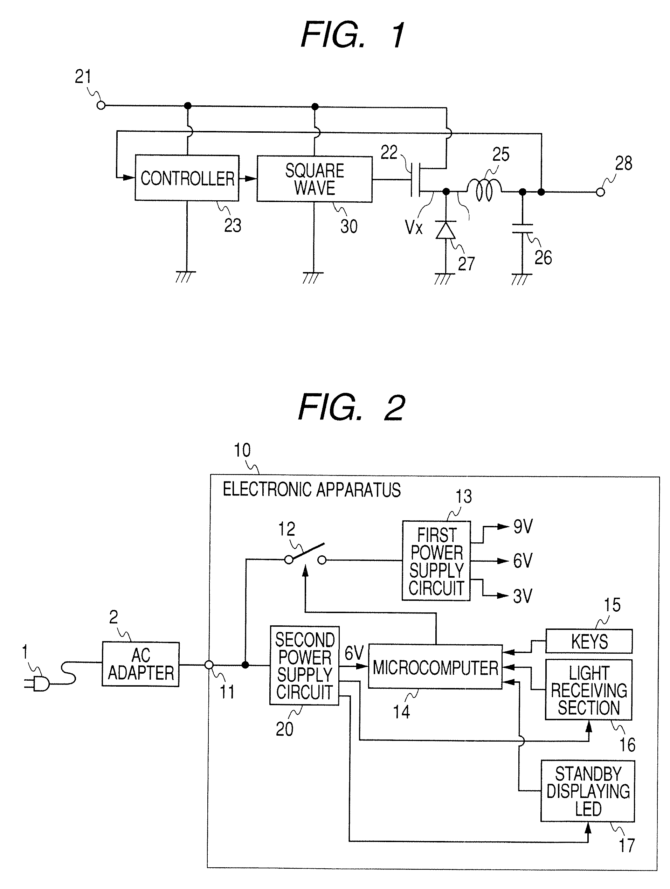

Hereinafter, the first embodiment of the invention will be explained with reference to Figs. 1 through 4.

In the present embodiment, it is applied to a power supply circuit (a power supply device) required for an electronic apparatus. The electronic apparatus is provided with two power supply circuits, namely a power supply circuit for supplying necessary power in the power-on state and a power supply circuit for supplying power to the circuit to be always operated in the standby state when powered-off.

Firstly, the power supply configuration of the electronic apparatus will be explained with reference to Fig. 2. The electronic apparatus 10 is provided with a direct-current power input terminal 11. The direct-current power input terminal 11 is arranged to be variable voltage active input accepting low voltage direct-current power supply in a predetermined range such as 8V through 12V. Although there is adopted a configuration in which the direct-current power input terminal 11 is supplied with the direct-current power converted by an AC adapter 2 equipped with a power connector 1 to be connected to the outlet from which the commercial alternating-current power (e.g., AC 100V) can be obtained, it is also possible to supply the direct-current power input terminal 11 with other power source such as a car battery.

The direct-current power source obtained in the direct-current power input terminal 11 is supplied to a first power supply circuit 13 via a switch 12 to generate various power supply voltages necessary for the electronic apparatus in the power-on state, and the power supply voltages are supplied to the circuits requiring the power supply voltages. In the embodiment shown in Fig. 2, the first power circuit 13 is arranged to have a configuration of generating three kinds of direct-current power, namely 9V, 6V, and 3V. The first power circuit 13 is a power supply circuit with a relatively large capacity such as about several tens watts.

Further, in the present embodiment, a second power supply circuit 20 is provided separately from the first power supply circuit 13. The second power supply circuit 20 is a circuit for supplying the power to the circuits to which the power needs to be always supplied even when the electronic apparatus is in the standby state with the power turned-off, and as a power supply capacity it has a very small capacity of, for example, 0.01W, which is significantly smaller than the power supply capacity of the first power supply circuit 13. The second power supply circuit 20 is composed of the switching power supply circuit, and outputs 6V here. Accurately, it should be noted here that it is the direct-current power supply with a voltage in a range of 6.0V through 6.5V as described below.

The direct-current power of about 6V converted by the second power supply circuit 20 is supplied to a microcomputer 14 which controls the operation of the electronic apparatus 10, a light receiving section 16 for an infrared signal, and a standby displaying light emitting diode (LED) 17. The light receiving section 16 for an infrared signal is a light receiving section (a receiver section) for receiving transmission from a remote controller (not shown) for remote-controlling operations of the electronic apparatus 10, and always supplies the signal received by the light receiving section 16 to the microcomputer 14 by the second power supply circuit 20 always supplying the power thereto. The microcomputer 14 is arranged to have a configuration of setting the switch 12 to the off state not to supply the first power supply circuit 13 with the input power when the apparatus is in the standby state with the power turned-off. Further, it always watches whether or not the key provided to the apparatus is operated and whether or not the light receiving signal is supplied from the light receiving section 16 during the standby state, and if either of them occurs, it sets the switch 12 to the on state to supply the first power supply circuit 13 with the direct-current power, thus making the first power supply circuit 13 supply power to each section in the apparatus. The standby displaying LED 17 emits light with the power from the second power supply circuit 20 while the electronic apparatus 10 is in the standby state with the power turned-off.

In the present embodiment, the second power supply circuit 20 provided to the electronic apparatus 10 thus configured is configured as shown in Fig. 1.

Hereinafter, the power supply circuit according to the present embodiment as shown in Fig. 1 will be explained. The power supply circuit according to the present embodiment is a switching power supply circuit for controlling the output voltage by switching on and off the direct-current power (the direct-current power obtained in the direct-current power input terminal 11 shown in Fig. 2) obtained in an input terminal 21 by a switching element 22 at high speed. As the switching element 22, for example, a P-channel field-effect transistor (FET) is used. The direct-current power obtained in the input terminal 21 is supplied to a control section 23 and a square wave generator 30 in addition to the switching element 22. The control section 23 judges the voltage of the power obtained in an output terminal 28 of the power supply circuit to control the oscillation output of the square wave generator 30. The control state of the oscillation output will be described later.

The square wave generator 30 is a generator for oscillating and outputting a square wave composed of a high level and a low level repeated with a constant duty cycle, and the control section 23 controls switching on and off the square wave output of the square wave generator 30. The square wave output by the square wave generator 30 is supplied to the gate of the switching element 22, and controls switching of the input power by the switching element 22.

Between the switching element 22 and the output terminal 28, there is configured a smoothing circuit for the power switched by the switching element 22. Specifically, a coil 25 is connected between the switching element 22 and the output terminal 28, a capacitor 26 is connected between a ground potential section and the connection point of the output terminal 28 and the coil 25, and further a flywheel diode 27 is connected between the ground potential section and the connection point of the switching element 22 and the coil 25. The switching output of the switching element 22 is smoothed by these elements 25, 26, and 27, and then supplied from the output terminal 28 to a circuit (the microcomputer 14 and the light receiving section 16 in Fig. 2) in the subsequent stage.

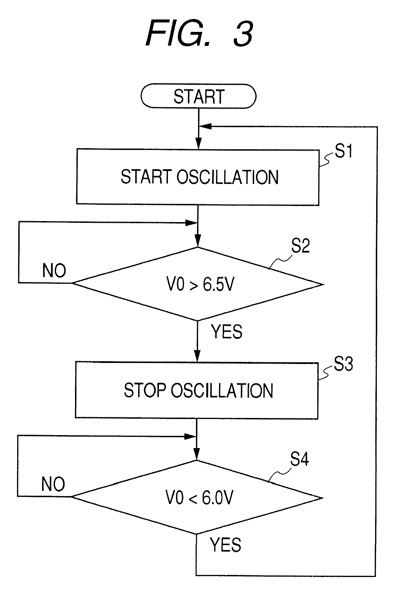

Fig. 3 is a flowchart showing an example of the control state in the control section 23 provided to the power supply circuit according to the present embodiment. Firstly, the control section 23 controls the square wave generator 30 to start oscillation in a constant duty cycle (step S1). When the oscillation output is started, the switching element 22 performs switching in sync with the oscillation output, thus increasing the output voltage in the output terminal 28. In the state in which switching is thus performed, whether or not the output voltage V0 obtained in the output terminal 28 exceeds 6.5V is judged (step S2). In the judgment, if it does not exceed 6.5V, the oscillation in the square wave generator 30 is continued, and the oscillation in the square wave generator 30 is stopped at the moment it exceeds 6.5V (step S3). By stopping the oscillation, switching in the switching element 22 stops and the capacitor 26 forming the smoothing circuit is discharged, thus the output voltage decreases gradually. At this moment, the control section 23 judges whether or not the output voltage V0 has become lower than 6.0V (step S4). In the judgment, if the output voltage has become lower than 6.0V, the process returns to the step S1 to make the square wave generator 30 start oscillation at a constant duty cycle.

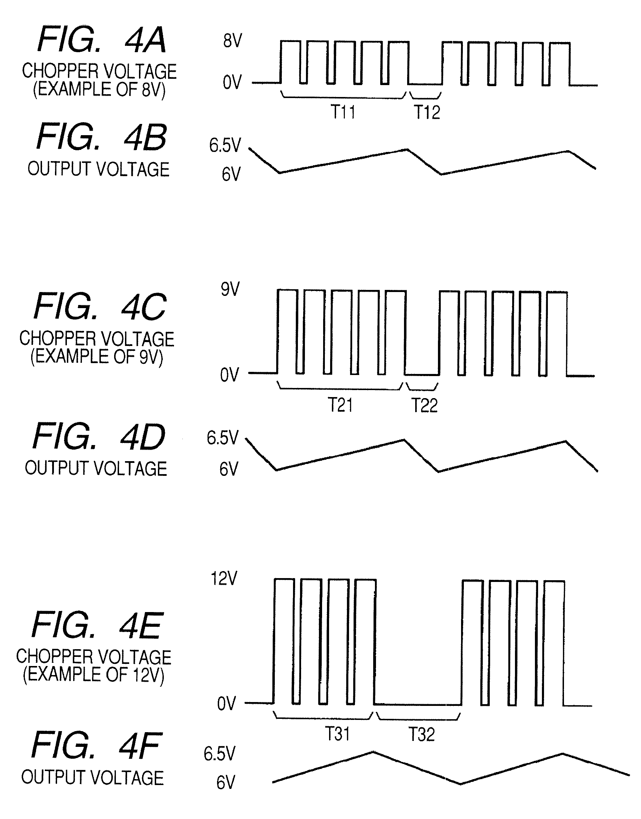

Figs. 4A through 4F show the switching states in the switching element 22 of the power supply circuit according to the present embodiment separately for respective voltages of the input power. In the examples shown in Figs. 4A through 4F, the case with the input voltage of 8V (Figs. 4A and 4B), the case with 9V (Figs. 4C and 4D), and the case with 12V (Figs. 4E and 4F) are shown. The chopper voltages shown in Figs. 4A, 4C, and 4E are voltages at the point Vx in the circuit diagram shown in Fig. 1, which is an output before smoothing and after switching in the switching element 22. It should be noted that the duty cycle of the square wave output by the square wave generator 30 according to the present embodiment is set to 0.875 (the ratio of the periods in which the square wave is in the high level).

Firstly the case with the 8V input will be explained. In this case, the chopper voltage obtained by switching in the switching element 22 comes into the state shown in Fig. 4A. As shown in Fig. 4A, in the period T11 in which the chopper voltage of 8V is output in the form of the square wave with a constant duty cycle, the output voltage shown in Fig. 4B gradually increases, and then a pause period T12 in which the chopper voltage becomes 0V occurs at the moment the output voltage exceeds 6.5V. In the pause period T12, the output voltage drops gradually from 6.5V to 6.0V because the output from the switching element 22 is not supplied thereto. When 6.0V is reached, the square wave with a constant duty cycle is started again, thus the process of gradually increasing the output voltage as shown in Fig. 4B is repeated.

Then, the case with the 9V input will be explained. In this case, the chopper voltage obtained by switching in the switching element 22 comes into the state shown in Fig. 4C. The only difference between the state shown in Fig. 4C and the case with the 8V input shown in Fig. 4A is the pulse height of the voltage (the input voltage value), and the duty cycles are the same. However, since the input voltage values are different from each other, the period T21 in which the chopper voltage of 9V is being output in the form of the square wave with a constant duty in the case with the 9V input becomes a shorter period than the period T11 in which the chopper voltage of 8V is being output, and the pause period T22 in Fig. 4C becomes longer than the pause period T12 in Fig. 4A.

Similarly, regarding the chopper voltage in the case with the 12V input shown in Fig. 4E, the period T31 in which the chopper voltage is being output becomes a shorter period than the period T21 in which the chopper voltage of 9V is being output, and the pause period T32 in Fig. 4E becomes longer than the pause period T22 shown in Fig. 4C. Therefore, in any cases of the input voltages, the output voltages shown in Figs. 4B, 4D, and 4F, move up and down between 6.5V and 6.0V at a constant cycle.

Considering here about the ratios between the chopper voltage output period and the pause period in each voltage, assuming that the duty cycle of the output square wave is 0.875, if the input voltage is, for example, 8V, by switching the input voltage of 8V with the square wave with the duty cycle of 0.875, 8x0.875=7 is obtained, so the output of 7.0V is assumed to be obtained if no pause period exists. By multiplying the 7.0V output by 6/7 (namely, 0.86), 6V can be obtained. Therefore, by controlling with the ratio of the chopper voltage output period T11 of 0.86 and the pause period T12 of 0.14, the average output voltage of 6V is obtained.

Applying the same calculation to the case of the 9V input, by switching the input voltage of 9V with the square wave with the duty cycle of 0.875, 9x0.875=7.875 is obtained, and the output of 7.875V is assumed to be obtained if no pause period exists. By multiplying the 7.875V output by 0.76, 6V can be obtained. Therefore, by controlling with the ratio of the chopper voltage output period T21 of 0.76 and the pause period T22 of 0.24, the average output voltage of 6V is obtained.

In the case with the input voltage of 12V, by switching the input voltage of 12V with the square wave with the duty cycle of 0.875, 12x0.875=10.5 is obtained, and the output of 10.5V is assumed to be obtained if no pause period exists. By multiplying the output of 10.5V by 0.57, 6V can be obtained. Therefore, by controlling with the ratio of the chopper voltage output period T31 of 0.57 and the pause period T32 of 0.43, the average output voltage of 6V is obtained.

As described above, by controlling switching of the input voltage with the square wave having a constant duty cycle, and by setting the pause period width in accordance with the voltage thereof, the output voltage can be made be organized within a certain range. Since the switching power supply circuit thus controlled requires only a circuit for generating the square wave with a constant duty cycle as the circuit for generating the square wave, it is possible to cope with the variable input voltage with a simple and efficient circuit configuration. Therefore, it is suitable to the power supply circuit for supplying power to the circuits necessary to be always operated in the standby state.

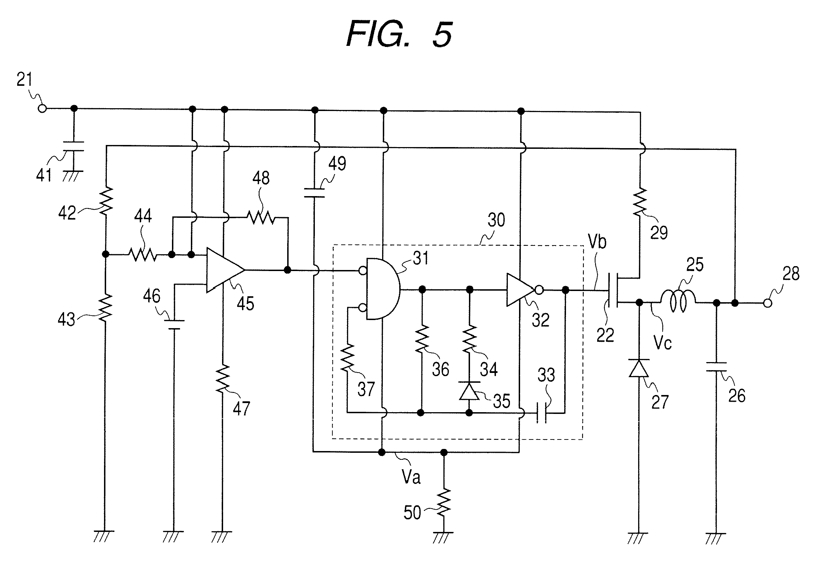

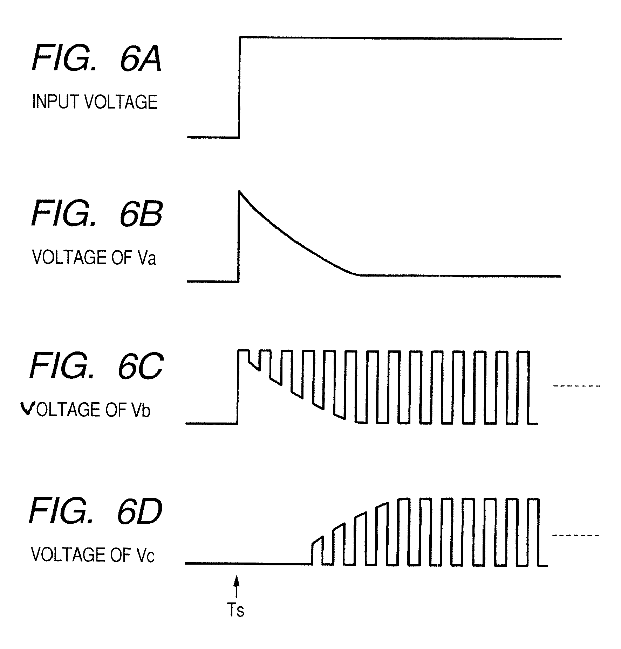

Hereinafter, a second embodiment of the invention will be explained with reference to Figs. 5 and 6A through 6D. In Figs. 5 and 6A through 6D, the portions corresponding to Figs. 1 through 3, and 4A through 4F described in the first embodiment are denoted with the same reference numerals.

The switching power supply circuit according to the present embodiment has the same basic configuration as the switching power supply circuit explained in the first embodiment, and controls switching of the input voltage with the square wave having the constant duty cycle, and performs the process for making the output voltage be organized within a certain range by setting the pause period in accordance with the voltage thereof. Further, in the present embodiment, a configuration for dealing with starting-up of the switching power supply circuit is adopted.

Fig. 5 is a diagram showing the configuration of the switching power supply circuit according to the present embodiment. In the present embodiment, the input terminal 21 is connected to the switching element 22 via a resistor 29. The input terminal 21 is grounded via a capacitor 41. A coil 25 is connected between the switching element 22 and the output terminal 28, the connection point of the coil 25 and the output terminal 28 is grounded via the capacitor 26, and the connection point of the switching element 22 and the coil 25 is grounded via the flywheel diode 27. The coil 25 and the capacitor 26 form the smoothing circuit.

The voltage obtained in the output terminal 28 is divided by the resistors 42, 43, and the obtained voltage is supplied to one of the comparing input terminals of the comparator 45 via a resistor 44. The other of the comparing input terminals of the comparator 45 is provided with the output voltage of a reference voltage source 46. The comparing output terminal and one of the comparing input terminals of the comparator 45 are connected with resistor 48.

The signal output from the comparing output terminal of the comparator 45 is supplied to one of the input terminals of the AND gate (negative-true logic, hereinafter the same is applied thereto) 31 in the square wave generator 30. The signal output from the output terminal of the AND gate 31 is supplied to the gate of the switching element 22 via the inverter 32.

The AND gate 31 and the inverter 32 in the square wave generator 30 are supplied with the power obtained in the input terminal 21, and the negative power supply terminals of the AND gate 31 and the inverter 32 are connected to the ground potential section via a resister 50. It should be noted that a capacitor 49 is connected between the input terminal 21 and the resistor 50.

The output terminal of the inverter 32 in the square wave generator 30 is connected to the other of the input terminals of the AND gate 31 via a series circuit including a capacitor 33 and a resistor 37. The connection point of the output terminal of the AND gate 31 and the inverter 32 is connected to the connection point of the capacitor 33 and the resistor 37 via a series circuit of the resistor 34 and the diode 35. Further, a resistor 36 is connected in parallel to the series circuit of the resistor 34 and the diode 35.

The operation of the thus configured switching power supply circuit shown in Fig. 5 will be explained. The power obtained in the input terminal 21 is switched by the switching element 22 in sync with the square wave output by the square wave generator 30, smoothed by the smoothing circuit composed of the coil 25 and the capacitor 26, and output to the output terminal 28. This basic operation is the same as the operation of the configuration according to Fig. 1 explained in the first embodiment. In the case with the configuration shown in Fig. 5, the configuration of the comparator 45 and the peripheral circuit thereof is provided as a corresponding configuration to the control section 23 shown in Fig. 1. In the comparator 45, the voltage obtained in the output terminal 28 is divided by the resistors 42, 43, then compared with the output of the reference voltage source 46, and the comparison result output is supplied to the AND gate 31 in the square wave generator 30, thus the oscillation with a constant duty cycle in the square wave generator 30 can be controlled. The series circuit of the resistor 34 and the diode 35, and the resistor 36 form a time constant circuit together with the capacitor 33, and generate the square wave with a desired duty cycle.

It should be noted here that since the comparing output terminal and one of the comparing input terminals of the comparator 45 are connected using the resistor 48, a predetermined hysteresis is provided to the comparison operation in the comparator 45. Since the hysteresis circuit composed of the resistor 48 is connected, there is caused the difference between a lower limit voltage and an upper limit voltage with which the comparison operation is performed. By utilizing the feature of generating the difference between the lower limit voltage and upper limit voltage, as shown in Figs 4A through 4F, for example, the detection that the voltage becomes lower than 6.0V and the detection that the voltage exceeds 6.5V can be performed.

In the square wave generator 30 shown in Fig. 5, in accordance with the comparison result of the comparator 45 being supplied to the AND gate 31, the oscillation operation of the square wave generator 30 is controlled, the oscillation with a constant duty cycle is on/off-controlled, the oscillation control is performed in the state explained in the first embodiment using Figs. 4A through 4F, and if the input voltage is in the stipulated range of, for example, 8V through 12V, the output voltage within the certain range of 6.0V through 6.5V can be output.

Further, in the present embodiment, by adopting the configuration of connecting the capacitor 49 in parallel to the power supply path when the power supply voltage obtained in the input terminal 21 is applied as the power for the operation to the AND gate 31 and the inverter 32 in the square wave generator 30, it becomes possible to obtain the square wave having the rising edge, which is generated by the square wave generator 30 at the beginning of the power input, shaped so as to rise gradually.

Figs. 6A through 6D are charts showing an example of the state in which the square wave rises gradually at the beginning of the power input.

Fig. 6A shows the power supply voltage (the input voltage) obtained in the input terminal 21, and the power supply voltage rapidly rises to a predetermined voltage (the voltage within the range of 8V through 12V) with the timing Ts. Fig. 6B shows the potential of the connection point Va of the negative power supply terminals of the AND gate 31 and the inverter 32 and the resistor 50, which is disposed between the negative power supply terminals of the AND gate 31 and the inverter 32 and the ground potential section. The potential of the connection point Va rises rapidly with the timing Ts because the capacitor 49 is connected thereto, and gradually drops to nearly 0V with a certain time constant. By thus controlling the power supply voltage of the AND gate 31 and the inverter 32, the output voltage waveform Vb (namely, the gate drive voltage for the switching element 22) of the square wave generator 30 becomes to have a shape in which the potential in the low level period of the square wave varies, as shown in Fig. 6C, in proportion to the potential Va shown in Fig. 6B.

Therefore, the gate drive voltage of the switching element 22 composed of P-channel FET rises gradually, and as a result, the output voltage Vc (the chopper voltage) of the switching element 22, as shown in Fig. 6D, becomes to have the shape in which the potential when the switching element 22 is in the on state rises gradually. As described above, by configuring that the voltage of the power supply at the beginning of the power supply input rises gradually, the switching condition in the switching element 22 at the beginning of the power input becomes the preferable rising state, although it is the configuration for performing switching at a constant duty cycle, the rash current in the start-up state can be reduced, thus the elements in the power supply circuit can be protected.

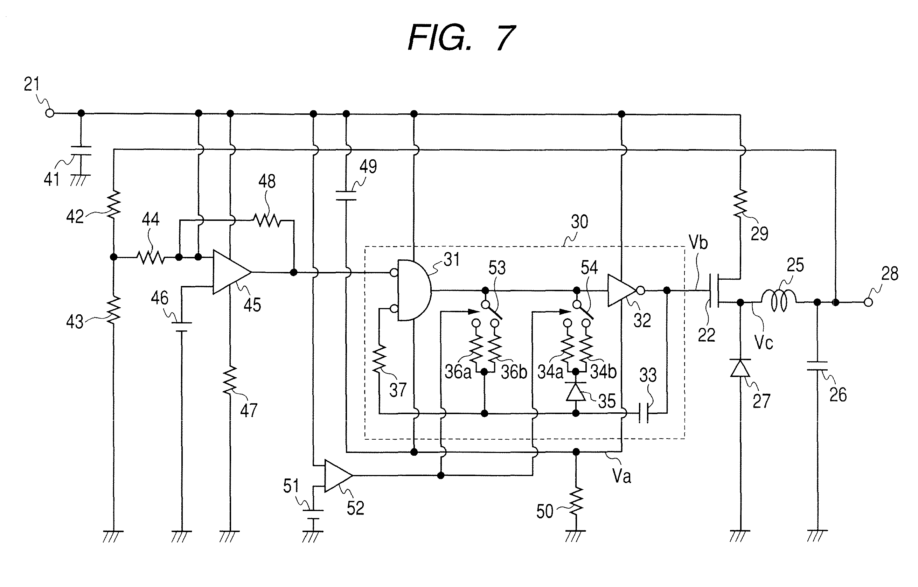

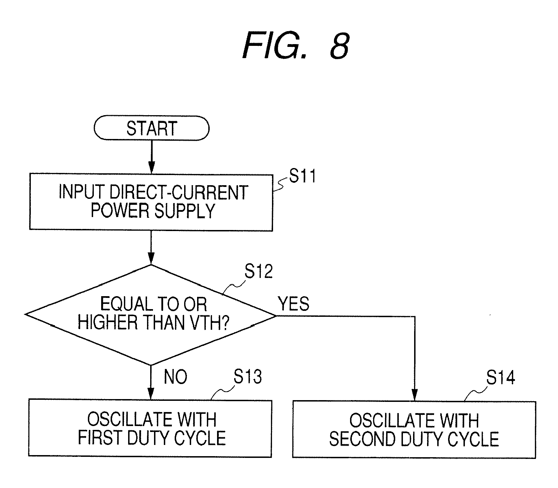

Hereinafter, a third embodiment of the invention will be explained with reference to Figs. 7 and 8. In Figs. 7 and 8, the portions corresponding to Figs. 1 through 3, 4A through 4F, 5, and 6A through 6D described in the first and the second embodiment are denoted with the same reference numerals.

The switching power supply circuit according to the present embodiment has a configuration of further switching into two stages the duty cycle of the square wave output by the square wave generator in accordance with the input power supply voltage in addition to the switching power supply circuit explained in the second embodiment, and other portions are assumed to be the same configuration as the switching power supply circuit shown in Fig. 5 described in the second embodiment.

Specifically, the power supply circuit according to the present embodiment shown in Fig. 7 is provided with a comparator 52 for comparing the voltage obtained in the input terminal 21 and the voltage of the reference voltage source 51. Further, as the resisters 34, 36 (Fig. 5) in the square wave generator 30, two resisters 34a, 34b having different resistances from each other, and also two resistors 36a, 36b having different resistances from each other. Further, the configuration for selecting either one of the resistors 34a, 34b by a switch 53 and for selecting either one of the resistors 36a, 36b by a switch 54 is adopted. The switches 53, 54 are configured to operate in conjunction with each other in accordance with the output of the comparator 52. The comparator 52 judges whether or not the input power supply voltage exceeds a specific voltage VTH, which is in a range of variation from 8V through 20V of the input power supply voltage.

In this judgment, if it is judged that the input voltage exceeds the specific voltage in the comparator 52, the switches 53, 54 are respectively connected to one of the resistors while the input voltage is equal to or lower than the specific voltage VTH, then the switches 53, 54 are respectively connected to the other of the resistors. As described above, by controlling the selection of the resistors 34a, 34b, or the resistors 36a, 36b in the square wave generator 30 in accordance with the input power supply voltage, the duty cycle of the square wave output by the square wave generator 30 can be controlled into two stages. Other portions are configured to be the same as the switching power supply circuit shown in Fig. 5.

The flowchart shown in Fig. 8 shows the duty cycle setting condition. When the direct-current power supply is input to the input terminal 21 (step S11), whether or not the voltage of the input power supply exceeds the specific voltage VTH is judged (step S12), if it does not exceed, the oscillation state is fixed to oscillate with the first duty cycle (step S13). If it has exceeded, the oscillation state is fixed to oscillate with the second duty cycle (step S14).

By thus switching the duty cycle into two stages, it becomes possible to make the switching condition in the switching element 22 constant, thus the operation sound caused by switching can be modified to have a frequency not so offensive to the ear. More specifically, if the duty cycle is made constant, as explained using Figs. 4A through 4F, the ratio between the switching period and the pause period varies, and in the condition in which a certain voltage is input, there is a possibility of causing a switching operation sound with a harsh frequency band (e.g., a frequency around 3000Hz). In such a case, by switching the duty cycle of the oscillation signal into two stages, the switching operation sound with a harsh frequency band can be prevented from being caused.

It should be noted that the specific circuit configurations shown or described hereinbefore in the explanations of each of the embodiments only show an example thereof, and accordingly, the present invention is not limited to these circuit configurations. Further, values such as power supply voltages or duty cycles are presented only for exemplifications, and accordingly, the invention is not limited to these values.

It should be understood by those skilled in the art that various modifications, combinations, sub-combinations and alterations may occur depending on design requirements and other factors insofar as they are within the scope of the appended claims or the equivalents thereof.

## Claims

1. A switching power supply device comprising:
a switching element (22) for switching an input direct-current power;
a smoothing section (25, 26, 27) for smoothing and then outputting the direct-current power switched by the switching element (22);
a square wave generating section (30) for generating a square wave with a constant duty cycle to control switching by the switching element (22); and
a control section (23) for watching an output voltage of the smoothing section (25, 26, 27) to control a period of generating the square wave generated by the square wave generating section (30) so that the output voltage is organized within a certain range.

2. The switching power supply device according to Claim 1, wherein
the constant duty cycle of the square wave generated by the square wave generating section (30) is switched between a first constant duty cycle and a second constant duty cycle in accordance with a voltage of the input direct-current power.

3. The switching power supply device according to Claim 1, wherein
the switching element (22) is configured so that a gate driving voltage of the switching element (22) rises gradually while the voltage of the input direct-current power rises.

4. The switching power supply device according to Claim 1, wherein
the input direct-current power is a direct-current power obtained by rectifying an alternate-current power by a rectification section.

5. An electronic apparatus having a switching power supply circuit as a power supply circuit, wherein
the switching power supply circuit includes
a switching element (22) for switching an input direct-current power,
a smoothing section (25, 26, 27) for smoothing and then outputting the direct-current power switched by the switching element (22),
a square wave generating section (30) for generating a square wave with a constant duty cycle to control switching by the switching element (22), and
a control section (23) for watching an output voltage of the smoothing section (25, 26, 27) to control a period of generating the square wave generated by the square wave generating section (30) so that the output voltage is organized within a certain range.

6. The electronic apparatus according to Claim 5, wherein
the switching power supply circuit is arranged to be a power supply circuit from which a standby power the electronic apparatus always requires is obtained.

7. A method of controlling a switching power supply circuit for switching an input direct-current power by a switching element (22) to convert voltage, comprising the steps of:
smoothing and then outputting the direct-current power switched by the switching element (22);
generating a square wave with a constant duty cycle to control switching by the switching element (22); and
watching a voltage of the smoothed output to control a period of generating the rectangle wave so that the output voltage is organized within a certain range.
